# EUROPÄISCHE PATENTSCHRIFT

(11) **EP 1 816 810 B1**
(45) Veröffentlichungstag und Bekanntmachung des Hinweises auf die Patenterteilung: **07.03.2018**
(21) Anmeldenummer: 07100521.9
(22) Anmeldetag: 15.01.2007
(51) Int. Cl.: H04L 12/58, H04M 3/533, H04L 29/08

(54) **MMS-GENERATOR UND SPRACHÜBERMITTLUNGSVERFAHREN**
MMS GENERATOR AND VOICE COMMUNICATION METHOD
GÉNÉRATEUR DE MMS ET PROCÉDÉ DE TRANSMISSION VOCALE

(30) Priorität: 07.02.2006 DE 102006005759
(43) Veröffentlichungstag der Anmeldung: 08.08.2007
(73) Patentinhaber: Vodafone Holding GmbH, 40213 Düsseldorf (DE)
(72) Erfinder: Lien, Tam, 40599 Düsseldorf (DE); Steube, Christian, 40215 Düsseldorf (DE)
(74) Vertreter: Weisbrodt, Bernd

(56) Entgegenhaltungen:
- EP-A1- 1 519 526
- US-A1- 2005 018 821

## Beschreibung

### Technisches Gebiet

Die Erfindung betrifft ein Verfahren zum Übermitteln einer Sprachnachricht an ein Mobilfunkendgerät über ein Mobilfunknetz, wobei im Mobilfunknetz Mittel zum Erfassen und digitalen Zwischenspeichern der Sprachnachricht eines Anrufenden vorgesehen sind *und ein Überprüfen mit einer Prüfeinheit eines MMS-Generators, ob das Mobilfunkendgerät eines angerufenen Mobilfunkteilnehmers das MMS-Datenformat verarbeiten kann.* Ferner betrifft die Erfindung einen MMS-Generator für ein Mobilfunknetz, wobei im Mobilfunknetz Mittel zum Erfassen und digitalen Zwischenspeichern einer Sprachnachricht vorgesehen sind, *eine Generatoreinheit zum Generieren einer MMS mit Audiodaten, welche der zwischengespeicherten Sprachnachricht entsprechen, eine Übertragungseinheit zum Übertragen der MMS und eine Prüfeinheit zum Prüfen, ob das Mobilfunkendgerät des angerufenen Mobilfunkteilnehmers das MMS-Datenformat verarbeiten kann.*

### Stand der Technik

Anrufbeantworter sind sowohl im Festnetz als auch im Mobilfunknetz schon seit langem bekannt. Sobald ein Teilnehmer nicht erreichbar ist, schaltet sich ein Anrufbeantworter ein, der die Anrufe entgegennimmt. Nach einer kurzen Ansage kann der Anrufer dann
auf dem Anrufbeantworter eine Sprachnachricht hinterlassen. Der Angerufene kann nun bei Bedarf den Anrufbeantworter abfragen und sich die Sprachnachrichten anhören. Die Anrufbeantworter können dabei lokal bei einem Teilnehmer vorhanden sein, oder aber auch zentral in dem entsprechenden Netz vorgesehen sein. Lokale Anrufbeantworter sind entweder spezielle Geräte, die zwischen dem Telefon und der Telefonverbindung geschaltet sind, oder auch direkt im Telefongerät integriert sind. Bei Mobilfunkendgeräten sind die lokalen Anrufbeantworter üblicherweise im Endgerät installiert. Im Fall, dass die Anrufbeantworter zentral im Netz angeordnet sind, besteht für den Teilnehmer die Möglichkeit einer Fernabfrage.

Insbesondere aufgrund von Funklöchern - Bereiche in denen Mobilfunkendgeräte keine Verbindung zum Mobilfunknetz bekommen - passiert es bei Mobilfunknetzen häufiger, dass ein Mobilfunkteilnehmer nicht erreichbar ist. Mobilfunknetze nutzen daher die Möglichkeit der zentralen Anrufbeantworter relativ häufig. Denn auch ein lokaler Anrufbeantworter würde in einem Funkloch nicht zu erreichen sein. Bei Mobilfunknetzen werden die Anrufbeantworter u.a. auch Mailboxen genannt, da sie nicht nur gesprochene Nachrichten, sondern auch Textnachrichten enthalten können. Es sind ferner standardisierte Nachrichtendienste im Bereich des Mobilfunks zur Übermittlung von Mitteilungen bekannt. Zu den im GSM- und UMTS-Standard häufigsten standardisierten Nachrichtendiensten gehören der SMS (= Short Message Service) oder MMS-Nachrichten (= Multimedia Message Service).

Praktisch alle Mobilfunkbetreiber bieten den Service an, sobald eine Nachricht auf der Mailbox enthalten ist, dem Mobilfunkteilnehmer eine SMS zu übermitteln, dass er seine Mailbox bitte abhören möchte, da dort eine Nachricht eines Anrufers enthalten sei. Damit weiß der Mobilfunkteilnehmer sofort, ob er eine Nachricht auf der Mailbox vorfindet. Nicht nur wegen der erhöht anfallenden Kosten, beispielsweise im Ausland beim Versand von SMS, hat ein Mobilfunkteilnehmer die Möglichkeit die Mailbox zu deaktivieren. Wenn die Mailbox deaktiviert ist, kann nunmehr der Anrufer keine Nachricht hinterlassen. Damit wird der Angerufene über die Telekommunikationsverbindung praktisch unerreichbar. Mittlerweile wird dem Angerufenen, obwohl er die Mailbox ausgeschaltet hat, eine SMS übermittelt. In der SMS wird dem Mobilfunkteilnehmer mitgeteilt, dass jemand versucht hat ihn zu
erreichen. Wenn die Nummer des Anrufers im Netz bekannt ist wird diese dem Mobilfunkteilnehmer ebenfalls mitgeteilt.

*In der* EP 1 519 526 A1 *wird ein Benachrichtigungsverfahren und ein entsprechender Nachrichten-Server mit einer Unterstützung von MMS-Nachrichten offenbart. In einer Sprach-Mailbox des Nachrichten-Servers hinterlassene Sprachnachrichten von Anrufern werden in dem Nachrichten-Server in MMS-Nachrichten konvertiert. Anschließend wird die MMS-Nachricht über ein MMS-Dienstzentrum (MMSC) an ein MMS-fähiges Mobilfunkendgerät des angerufenen Teilnehmers weitergeleitet. Nach Empfang der MMS-Nachricht ist ein Anhören der Sprachnachricht für den Teilnehmer mit dem Mobilfunkendgerät möglich.*

*Die* US 2005/018821 A1 *beschreibt ein weiteres System und ein Verfahren zur Übermittlung einer Sprachnachricht eines Anrufers als MMS-Nachricht an den angerufenen Teilnehmer. In einer Sprach-Mailbox eines Nachrichten-Servers wird die Sprachnachricht des Anrufers gespeichert. Daraufhin wird von einer Datenbank ein für den Anrufer gespeichertes Bild angefordert und zusammen mit der Sprachnachricht in eine MMS-Nachricht eingefügt. Die MMS-Nachricht wird über ein MMSC an ein Mobilfunkendgerät des angerufenen Teilnehmers übermittelt. Anschließend wird das Bild auf einer Anzeige des Mobilfunkendgeräts dargestellt und die Sprachnachricht vorgespielt.*

Es sind bislang weder Verfahren noch Einrichtungen für ein Mobilfunknetz bekannt, dem Mobilfunkteilnehmer eine Sprachnachricht des Anrufers auch bei deaktivierter Mailbox zukommen zu lassen. Oft ist es einem Mobilfunkteilnehmer aber gar nicht bewusst, dass sein Mobilfunkendgerät mit dem Mobilfunknetz nicht in Verbindung steht. Dies kommt beispielsweise vor, wenn ein Mobilfunkteilnehmer mit seinem Mobilfunkendgerät sich in einem Funkloch befindet und dadurch nicht erreichbar ist. Wenn seine Mailbox dann nicht eingeschaltet ist, kann ihm in einem solchen Fall keiner eine Sprachnachricht hinterlassen.

### Offenbarung der Erfindung

Aufgabe der Erfindung ist es Nachteile des Standes der Technik zu vermeiden und insbesondere Sprachnachrichten auch bei einer ausgeschalteten Mailbox eines Mobilfunkteilnehmers weiterzuleiten.

Erfindungsgemäß wird die Aufgabe durch ein Verfahren zum Übermitteln einer Sprachnachricht an ein Mobilfunkendgerät über ein Mobilfunknetz gemäß Anspruch 1 gelöst. Ferner wird die Aufgabe durch einen MMS-Generator für ein Mobilfunknetz gemäß Anspruch 4 gelöst. Der Vorteil, der sich durch die Erfindung gegenüber herkömmlichen Anrufbeantwortersystemen ergibt, ist, dass nunmehr eine Sprachnachricht übermittelt werden kann, die prinzipiell ohne Mailbox bzw. Anrufbeantworter im herkömmlichen Sinne auskommt. Damit kann ein Teilnehmer trotz Funklöcher gesprochene Mitteilungen von einem Anrufer erhalten, die ihm sonst nicht übermittelt würden. Dadurch, dass MMS-Nachrichten im Mobilfunknetz bereits standardisiert sind, lässt sich eine Technik, wie sie hier vorgeschlagen wird, mit relativ wenig Aufwand realisieren.

*Bei dem* erfindungsgemäßen Verfahrens generiert der MMS-Generator eine Sprachnachricht als MMS, wenn eine zugeordnete Mailbox eines angerufenen Mobilfunkteilnehmers inaktiv geschaltet ist. Damit ist ein Mobilfunkteilnehmer in seinem Mobilfunkendgerät auch bei ausgeschaltetem Anrufbeantworter mit einer Sprachnachricht jederzeit erreichbar, sofern er mit dem Mobilfunknetz in Kontakt steht.

*Entsprechend sind bei dem erfindungsgemäßen MMS-Generator Steuerungsmittel vorgesehen, welche den MMS-Generator aktivieren, um eine Sprachnachricht als MMS zu generieren, wenn eine einem angerufenen Mobilfunkteilnehmer zugeordnete Mailbox inaktiv geschaltet ist. Durch diese Maßnahme wird geprüft, ob eine vorhandene Mailbox inaktiv ist. Ist die Mailbox inaktiv, dann wird bei Bedarf eine Sprachnachricht als MMS generiert. Andernfalls kann die Mitteilung des Anrufers auf den Anrufbeantworter bzw. die Mailbox gesprochen werden.*

Eine bevorzugte Variante des erfindungsgemäßen Verfahrens besteht auch darin, dass der MMS-Generator durch den Angerufenen zugeschaltet werden kann. Damit kann der angerufene Mobiltelefonteilnehmer selbst entscheiden und festlegen, ob er so generierte Sprachnachrichten erhalten soll oder nicht.

Es erweist sich als besonders vorteilhaft, wenn die Sprachnachricht auf die dem Angerufenen zugeordnete Mailbox als Zwischenspeicher gesprochen wird. Durch diese Maßnahme werden Ressourcen des Mobilfunknetzes gespart. Der Speicher, der für die Mailbox bereitgestellt wird, kann somit auch von dem MMS-Generator genutzt werden, indem dieser darauf zugreifen kann. Erfindungsgemäß wird vor der Übermittlung einer MMS mit der Sprachnachricht geprüft, ob das Mobilfunkendgerät des angerufenen Mobilfunkteilnehmers das MMS-Datenformat verarbeiten kann. Damit wird verhindert, dass unnötige Daten übermittelt werden. Einem Mobilfunkendgerät, das die Daten im MMS-Datenformat nicht verarbeiten kann, müssen nicht notwendigerweise solche Daten übermittelt werden. Damit werden Kapazitäten des Mobilfunknetzes und damit auch Kosten, die ggf. für den Mobilfunkteilnehmer anfallen, gespart.

Eine weitere bevorzugte Variante des erfindungsgemäßen MMS-Generators besteht darin, dass die dem Mobilfunkteilnehmer zugeordnete Mailbox als Zwischenspeicher für die Sprachnachricht vorgesehen ist. Analog zum Verfahren werden auch hier Ressourcen gespart.

Eine vorteilhafte Ausbildung des erfindungsgemäßen MMS-Generators erhält man dadurch, dass Mittel zum manuellen Zuschalten des MMS-Generators durch den angerufenen Mobilfunkteilnehmer vorgesehen sind. Durch diese Maßnahme wird erreicht, dass der angerufene Mobilfunkteilnehmer selbst bestimmen kann, wann er ggf. Sprachnachrichten von Anrufern erhalten möchte und wann nicht, indem er den MMS-Generator manuell, beispielsweise mit einer Funktionstaste seines Mobilfunkendgeräts, entweder zu- oder wegschalten kann.

Entsprechend zum erfindungsgemäßen Verfahren ist im MMS-Generator eine Prüfeinheit zum Prüfen, ob das Mobilfunkendgerät des angerufenen Mobilfunkteilnehmers das MMS-Datenformat verarbeiten kann, vorgesehen. Damit wird sichergestellt, dass das Mobilfunkendgerät das MMS-Datenformat verarbeiten kann.

Weitere Vorteile ergeben sich aus dem Gegenstand der Unteransprüche, sowie der Zeichnung mit der dazugehörigen Beschreibung.

### Kurze Beschreibung der Zeichnung

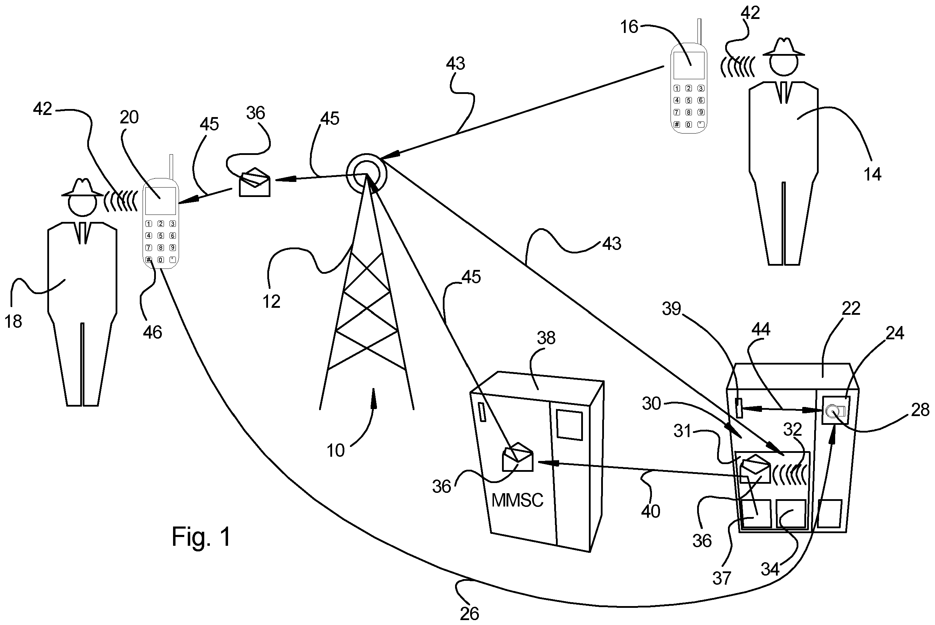

- Fig. 1: zeigt in einer schematischen Prinzipskizze das erfindungsgemäße Verfahren.

### Bevorzugtes Ausführungsbeispiel

In Fig. 1 wird mit 10 ein Mobilfunknetz bezeichnet. Das Mobilfunknetz 10 wird durch einen Mobilfunkmast 12 symbolisiert. Über das Mobilfunknetz 10 kann ein Mobilfunkteilnehmer 14 mit seinem Mobilfunkendgerät 16, einen Mobilfunkteilnehmer 18 über dessen Mobilfunkendgerät 20 anrufen. Der anrufende Mobilfunkteilnehmer 14 steht für jegliche Art von Anrufern. Die Anrufer können dabei beispielsweise auch aus dem Festnetz kommunizieren. Dies wird aus Gründen der einfachen Darstellung nicht gezeigt. Der angerufene Mobilfunkteilnehmer 18 verfügt in einem Server 22 über eine Mailbox 24. Die Mailbox 24 ist üblicherweise als Dienst des Mobilfunkbetreibers ein Bestandteil des Mobilfunknetzes 10. Die Mailbox 24 kann von dem Mobilfunkteilnehmer 18 Mittels seines Mobilfunkendgeräts 20 aktiviert oder deaktiviert werden. Pfeil 26 stellt den Zugriff des Mobilfunkteilnehmers 18 über Mobilfunkendgerät 20 auf die Mailbox 24 dar.

Die Mailbox 24 enthält einen Speicher 28, der Sprach- oder Textnachrichten eines Anrufers 14 bis zum Abruf durch den angerufenen Mobilfunkteilnehmer 18 zwischenspeichern kann. Mit 30 wird eine MMS-Generator mit einer Generatoreinheit 31 bezeichnet. Die Generatoreinheit 31 generiert aus digitalen Audiodaten 32, die in einem Speicher 34 vorliegen, eine MMS 36. Die Audiodaten 32 sind im vorliegenden Ausführungsbeispiel die Sprachnachrichten 42 des Mobilfunkteilnehmers 14. Die Sprachnachrichten 42 werden dazu über das Mobilfunknetz 10 zum MMS-Generator 30 übermittelt, Pfeile 43. Die so generierte MMS 36 wird mit einer Übertragungseinheit 37 an ein MMSC (= Multimedia Message Service Center) 38 weitergeleitet, Pfeil 40. In dem MMSC 38 wird MMS 36 mit der Sprachnachricht 42 des Anrufers 14, wie jede andere MMS behandelt. Die MMS 36 mit der Sprachnachricht 42 wird nun an das Mobilfunkendgerät 20 des angerufenen Mobilfunkteilnehmers 18 über das Mobilfunknetz 10 übermittelt, sobald dieses wieder erreichbar ist, Pfeile 45.

Ferner ist der MMS-Generator 30 mit der Mailbox 24 gekoppelt, Pfeil 44. Der MMS-Generator 30 ist dadurch in der Lage festzustellen, ob die Mailbox 24 aktiv oder inaktiv ist.

Zur Erläuterung der Erfindung wird im vorliegenden Ausführungsbeispiel davon ausgegangen, dass der Mobilfunkteilnehmer 18 seine Mailbox 24 deaktiviert hat und das Mobilfunkendgerät 20 des angerufenen Mobilfunkteilnehmers 18 für eine gewisse Zeit nicht erreichbar ist. Die Erfindung geht von der Situation aus, dass der anrufende Mobilfunkteilnehmer 14 den angerufenen Mobilfunkteilnehmer 18 nicht erreichen kann. Da die Mailbox 24 nicht aktiviert ist, kann diese auch keine Sprachnachricht 42 aufnehmen. Der MMS-Generator 30 prüft nun mit Prüfeinheit 39, ob die Mailbox 24 aktiv oder inaktiv ist, Pfeil 44. Wenn die Mailbox 24 inaktiv ist, fordert der MMS-Generator 30 den anrufenden Mobilfunkteilnehmer 14 mit einer Ansage auf, eine Sprachnachricht 42 für den angerufenen Mobilfunkteilnehmer 18 zu hinterlassen. Der angerufene Mobilfunkteilnehmer 14 spricht nun seine Sprachnachricht 42 in das Mobilfunkendgerät 16.

Die zu der Sprachnachricht 42 gehörigen Audiodaten 32 werden digital in dem Speicher 34 gespeichert. Um Kapazität zu sparen, kann alternativ vorgesehen sein, dass der Speicher 28 der Mailbox 24 als Zwischenspeicher an Stelle des separaten Speichers 34 für die Audiodaten 32 verwendet wird.

Der MMS-Generator 30 bildet aus den Audiodaten 32 eine MMS 36. Die MMS 36 wird an das MMSC 38 geleitet. Die Prüfeinheit 39 des MMS-Generators 30 überprüft ferner, ob das Mobilfunkendgerät 20 das MMS-Datenformat verarbeiten kann. Das MMSC 38 vermittelt anschließend die MMS 36 über das Mobilfunknetz 10 an das Mobilfunkendgerät 20 des angerufenen Mobilfunkteilnehmers 18. Der Mobilfunkteilnehmer 18 kann sich jetzt die Sprachnachricht 42 anhören, obwohl er seine Mailbox 24 ausgeschaltet hatte.

Dieses beschriebene Verfahren zur Generierung und Weiterleitung einer Sprachnachricht 42 als MMS 36 wird durch den angerufenen Mobilfunkteilnehmer 18 zugeschaltet. Dafür betätigt er eine Funktionstaste 46 seines Mobilfunkendgeräts 20. Damit muss er sich nicht mehr um seine herkömmliche Mailbox 24 kümmern.

## Patentansprüche

1. Verfahren zum Übermitteln einer Sprachnachricht (42) von einem Mobilfunkendgerät (16) eines anrufenden Mobilfunkteilnehmers (14) an ein Mobilfunkendgerät (20) eines angerufenen Mobilfunkteilnehmers (18) über ein Mobilfunknetz (10) mit den Verfahrensschritten:
a) Erfassen einer Sprachnachricht (42) eines anrufenden Mobilfunkteilnehmers (14) durch Mittel (24) zum Erfassen einer Sprachnachricht,
b) Speichern von zu der erfassten Sprachnachricht (42) gehörigen Audiodaten (32) durch Mittel (28,34) zum digitalen Zwischenspeichern einer Sprachnachricht,
c) Generieren einer MMS-Nachricht (36) aus den digital zwischengespeicherten Audiodaten (32) durch eine Generatoreinheit (31) eines MMS-Generators (30),
d) Überprüfen mit einer Prüfeinheit (39) des MMS-Generators (30), ob das Mobilfunkendgerät (20) des angerufenen Mobilfunkteilnehmers (18) das MMS-Datenformat verarbeiten kann, und
e) Weiterleiten der generierten MMS-Nachricht (36) durch eine Übertragungseinheit (37) des MMS-Generators (30) an ein MMSC (38) und Übermitteln dieser MMS-Nachricht (36) an das Mobilfunkendgerät (20) des angerufenen Mobilfunkteilnehmers (18) durch das MMSC (38),
**dadurch gekennzeichnet, dass**
- vor dem Erfassen der Sprachnachricht (42) mit der Prüfeinheit (39) des MMS-Generators (30) überprüft wird, ob eine dem angerufenen Mobilfunkteilnehmer (18) zugeordnete Mailbox (24) aktiv oder inaktiv geschaltet ist,
- der MMS-Generator (30) mittels Steuerungsmitteln aktiviert wird, um aus den Audiodaten (32) die MMS-Nachricht (36) zu generieren, wenn die zugeordnete Mailbox (24) des angerufenen Mobilfunkteilnehmers (18) inaktiv geschaltet ist, und
- eine Mitteilung des anrufenden Mobilfunkteilnehmers (14) auf die dem angerufenen Mobilfunkteilnehmer (18) zugeordnete Mailbox (24) gesprochen wird, wenn die zugeordnete Mailbox (24) des angerufenen Mobilfunkteilnehmers (18) aktiv geschaltet ist.

2. Verfahren nach Anspruch 1, **dadurch gekennzeichnet, dass** der MMS-Generator (30) durch den angerufenen Mobilfunkteilnehmer (18) zuschaltbar und wegschaltbar ist.

3. Verfahren nach einem der Ansprüche 1 oder 2, **dadurch gekennzeichnet, dass** ein Speicher (28) der dem angerufenen Mobilfunkteilnehmer (18) zugeordneten Mailbox (24) als Zwischenspeicher für die Audiodaten (32) der Sprachnachricht (42) verwendet wird.

4. MMS-Generator (30) für ein Mobilfunknetz (10), umfassend:
a) Mittel (24) zum Erfassen einer Sprachnachricht (42) eines anrufenden Mobilfunkteilnehmers (14),
b) Mittel (28,34) zum digitalen Zwischenspeichern von zu der erfassten Sprachnachricht (42) gehörigen Audiodaten (32),
c) eine Generatoreinheit (31) zum Generieren einer MMS-Nachricht (36) aus den digital zwischengespeicherten Audiodaten (32),
d) eine Prüfeinheit (39) zum Prüfen, ob das Mobilfunkendgerät (20) des angerufenen Mobilfunkteilnehmers (18) das MMS-Datenformat verarbeiten kann, und
e) eine Übertragungseinheit (37) zum Weiterleiten der generierten MMS-Nachricht (36) an ein MMSC (38),
**dadurch gekennzeichnet, dass**
- die Prüfeinheit (39) ferner zum Prüfen vorgesehen ist, ob eine dem angerufenen Mobilfunkteilnehmer (18) zugeordnete Mailbox (24) aktiv oder inaktiv geschaltet ist, und
- Steuerungsmittel vorgesehen sind, welche den MMS-Generator (30) aktivieren, um mittels der Generatoreinheit (31) aus den Audiodaten (32) eine MMS-Nachricht (36) zu generieren, wenn die Mailbox (24) des angerufenen Mobilfunkteilnehmers (18) inaktiv geschaltet ist.

5. MMS-Generator (30) nach Anspruch 4, enthaltend einen Speicher (28) der dem angerufenen Mobilfunkteilnehmer (18) zugeordneten Mailbox (24) als Zwischenspeicher für die Audiodaten der Sprachnachricht (42).

6. MMS-Generator (30) nach einem der Ansprüche 4 oder 5, enthaltend Mittel zum manuellen Zuschalten und Wegschalten des MMS-Generators (30) durch den angerufenen Mobilfunkteilnehmer (18).

## Claims

1. A method for transmitting a voice message (42) from a mobile terminal (16) of a calling mobile subscriber (14) to a mobile terminal (20) of a called mobile subscriber (18) via a mobile radio network (10) comprising the process steps:
a) recording a voice message (42) of a calling mobile subscriber (14) by means of means (24) for recording a voice message,
b) storing audio data (32) which belong to the recorded voice message (42) by means of means (28, 34) for temporarily storing a voice message in a digital manner,
c) generating a MMS message (36) from the digitally temporarily stored audio data (32) by means of a generator unit (31 of a MMS generator (30),
d) verifying by means of a test unit (39) of the MMS generator (30), whether the mobile terminal (20) of the called mobile subscriber (18) can process the MMS data format, and
e) forwarding the generated MMS message (36) by means of a transmission unit (37) of the MMS generator (30) to a MMSC (38) and transmitting this MMS message (36) to the mobile terminal (20) of the called mobile subscriber (18) by means of the MMSC (38),
**characterized in that**
- before the voice message (42) is recorded, the test unit (39) of the MMS generator checks, whether a mail box (24) assigned to the called mobile subscriber (18) is activated or deactivated,
- the MMS generator (30) will be activated by means of control means, in order to generate the MMS message (36) from the audio data (32), if the assigned mail box (24) of the called mobile subscriber (18) is deactivated,
- a message of the calling mobile subscriber (14) will be spoken onto the mail box (24) assigned to the called mobile subscriber (18), if the assigned mail box (24) of the called mobile subscriber (18) is activated.

2. A method according to claim 1, **characterized in that** the MMS generator (30) can be switched on or switched off by the called mobile subscriber (18).

3. A method according to one of the claims 1 or 2, **characterized in that** a memory (28) of the mail box (24) assigned to the called mobile subscriber (18) will be used as buffer memory for the audio data (32) of the voice message (42).

4. A MMS generator (30) for a mobile radio network (10), comprising:
a) means (24) for recording a voice message (42) of a calling mobile subscriber (14),
b) means (28, 34) for temporarily storing audio data (32) which belong to the recorded voice message (42) in a digital manner,
c) a generator unit (31) for generating a MMS message (36) from the digitally temporarily stored audio data (32),
d) a test unit (39) for checking whether the mobile terminal (20) of the called mobile subscriber (18) can process the MMS data format, and
e) a transmission unit (37) for forwarding the generated MMS message (36) to a MMSC (38),
**characterized in that**
- the test unit (39) is furthermore provided for checking whether a mail box (24) assigned to the called mobile subscriber (18) is activated or deactivated, and
- control means are provided which activate the MMS generator, in order to generate a MMS message (36) from the audio data (32) by means of the generator unit (31), if the mail box (24) of the called mobile subscriber (18) is deactivated.

5. A MMS generator (30) according to claim 4, containing a memory (28) of the mail box (24) assigned to the called mobile subscriber (18) as buffer memory for the audio data of the voice message (42).

6. A MMS generator (30) according to one of the claims 4 or 5, containing means for manually switching on and switching off the MMS generator (30) by the called mobile subscriber (18).

## Revendications

1. Procédé de transmission d'un message vocal (42) d'un terminal mobile (16) d'un abonné mobile appelant (14) à un terminal mobile (20) d'un abonné mobile appelé (18) via un réseau radio mobile (10), comprenant les étapes de procédé de:
a) saisir un message vocal (42) d'un abonné mobile appelant (14) par l'intermédiaire de moyens (24) pour saisir un message vocal,
b) stocker des données audio (32) appartenant au message vocal (42) saisi par l'intermédiaire de moyens (28, 34) pour mettre un message vocal en mémoire tampon de manière digitale,
c) générer un message MMS (36) à partir des données audio (32) mises digitalement en mémoire tampon par moyen d'une unité de générateur (31) d'un générateur MMS (30),
d) vérifier à l'aide d'une unité de test (39) du générateur MMS (30), si le terminal mobile (20) de l'abonné mobile appelé (18) est capable de traiter le format de données de MMS, et
e) envoyer le message MMS généré (36) à un MMSC (38) par moyen d'une unité de transmission (37) du générateur MMS (30) et transmettre ce message MMS (36) au terminal mobile (20) de l'abonné mobile (18) appelé par le MMSC(38),
**caractérisé en ce que**
- avant que le message vocal (42) soit saisi, il est vérifié par moyen de l'unité de test (39) du générateur MMS (30), si la messagerie (24) attribuée à l'abonné mobile appelé (18) est activée ou désactivée,
- le générateur MMS (30) est activé par l'intermédiaire de moyens de commande pour générer le message MMS (36) à partir des données audio (32), si la messagerie (24) attribuée à l'abonné mobile appelé (18) est désactivée,
- un message de l'abonne mobile appelant (14) est laissé sur la messagerie (24) attribuée à l'abonné mobile appelé (18), si la messagerie attribuée (24) à l'abonné mobile appelé (18) est activée.

2. Procédé selon la revendication 1, **caractérisé en ce que** le générateur MMS (30) peut être mis en marche et débranché par l'abonné mobile appelé (18).

3. Procédé selon l'une des revendications 1 ou 2, **caractérisé en ce qu'**un mémoire (28) de la messagerie (24) attribuée à l'abonné mobile appelé (18) est utilisé comme un mémoire tampon pour les données audio (32) du message vocal (42).

4. Générateur MMS (30) pour un réseau radio mobile (10), comprenant:
a) des moyens (24) pour saisir un message vocal (42) d'un abonné mobile appelant (14),
b) des moyens pour mettre des données audio (32) appartenant au message vocal saisi (42) digitalement en mémoire tampon,
c) une unité de générateur (31) pour générer un message MMS (36) à partir des données audio (32) mises digitalement en mémoire tampon,
d) une unité de test (39) pour vérifier, si le terminal mobile (20) de l'abonné mobile appelé (18) est capable de traiter le format de données de MMS, et
e) une unité de transmission (37) pour envoyer le message MMS généré (36) à un MMSC (38),
**caractérisé en ce que**
- l'unité de test (39) est en outre prévue pour vérifier, si une messagerie (24) attribuée à l'abonné mobile appelé (18) est activée ou désactivée, et
- des moyens de commande sont prévus, qui activent le générateur MMS (30) pour générer un message MMS (36) à partir des données audio (32) par moyen de l'unité de générateur, si la messagerie (24) de l'abonné mobile appelé (18) est désactivée.

5. Générateur MMS (30) selon la revendication 4, contenant un mémoire (28) de la messagerie (24) attribuée à l'abonné mobile appelé (18) comme mémoire tampon pour les données audio du message vocal (42).

6. Générateur MMS (30) selon l'une des revendications 4 ou 5, contentant des moyens pour la mise en marche et le débranchement manuels du générateur MMS (30) par l'abonné mobile appelé (18).
